# DEMANDE DE BREVET EUROPEEN

(11) **EP 0 580 488 A1**
(43) Date de publication de la demande: **26.01.1994**
(21) Numéro de dépôt: 93401854.0
(22) Date de dépôt: 19.07.1993
(51) Int. Cl.: B01D 63/06, C04B 41/49, C08G 79/14, C08G 79/12

(54) **Dispositif a membrane pour filtration, separation ou reaction catalytique**

(30) Priorité: 20.07.1992 FR 9208925
(71) Demandeur: SOCIETE DES CERAMIQUES TECHNIQUES, F-65460 Bazet (FR)
(72) Inventeur: Soria, Raymond, F-65460 Bazet (FR); Cominotti, Sophie, F-65000 Tarbes (FR); Gillot, Jacques, F-65310 Laloubere (FR)
(74) Mandataire: Laroche, Danièle

(57) **Abrégé**

Dispositif à membrane pour filtration, séparation ou réaction catalytique comportant un bloc macroporeux percé de canaux longitudinaux parallèles, dont la surface est recouverte d'une membrane de porosité plus fine que celle du bloc. Selon l'invention la porosité des deux extrémités dudit bloc est remplie d'un matériau dense (3) formé par un polycondensat organo-minéral mono ou polymétallique ayant subi un traitement thermique, ce type de condensat étant connu sous le nom de ORMOSIL (organically modified silicate) ou ORMOCER (organically modified ceramic).

## Description

La présente invention concerne un dispositif à membrane pour filtration, séparation ou réaction catalytique comprenant un bloc macroporeux, encore appelé support, en matériau céramique fritté, en métal fritté ou en verre ou en carbone; ce bloc est percé de un ou plusieurs canaux longitudinaux parallèles dont la surface est recouverte d'une membrane constituée d'une ou plusieurs couches, en matière organique ou en un matériau céramique fritté, ou en verre, ou en carbone, éventuellement modifié par ajout de substances ayant des propriétés catalytiques; la membrane présente une porosité plus fine que celle du bloc ou elle est perméable par diffusion; ce dispositif comprend en outre des moyens d'introduction d'un fluide à épurer à une extrémité des canaux, des moyens de recueil d'un fluide épuré situés au niveau de la surface latérale dudit bloc, et des moyens de recueil d'un fluide résiduel à l'autre extrémité des canaux.

On a déjà proposé dans les brevets FR-A-2 061 933 et US-A-4 069 157 des dispositifs de filtration dans lesquels le liquide à filtrer arrivant par une chambre d'entrée à une extrémité d'entrée du bloc s'écoule dans les canaux jusqu'à une extrémité de sortie vers une chambre de sortie; le filtrat traverse radialement la membrane des canaux, puis le bloc, de porosité plus grossière que celle de la membrane, avant d'être recueilli à l'extérieur du bloc; un liquide résiduaire est recueilli dans la chambre de sortie et recyclé.

Ces dispositifs sont sujets à des fuites de liquide à filtrer aux extrémités d'entrée et de sortie du bloc. En effet, sur les faces d'entrée et de sortie du bloc, ce liquide est en contact entre les canaux vers le bloc de porosité grossière, et une certaine fraction passe à travers le bloc pour rejoindre le filtrat, dont il vient diminuer la pureté. On ne peut donc obtenir une pureté élevée qu'en effectuant plusieurs filtrations successives. Ces fuites sont d'autant plus importantes que le diamètre moyen des pores du bloc macroporeux est élevé. Or ce diamètre est en général de l'ordre de 4 à 20 µm.

On pourrait monter le bloc entre des joints parallèles, mais ceci entraîne des difficultés de montage et n'évite pas les fuites résiduelles.

On a déjà proposé dans les brevets EP O 154 295 et EP 0 442 410 un procédé de réduction des fuites par remplissage des extrémités du bloc macroporeux par des particules céramiques ou polymériques. Mais les procédés décrits, s'ils améliorent la situation, ne permettent pas néanmoins d'obtenir une étanchéité d'extrémité sans défauts. De toutes façons, il est totalement insuffisant pour les membranes d'ultrafiltration, de nanofiltration, d'osmose inverse, de pervaporation ou de séparation de gaz. Cette insuffisance est d'autant plus nette que la couche séparatrice est dense comme en séparation de gaz ou en pervaporation.

Si on essaie d'éviter ce problème en réalisant le remplissage d'extrémité du matériau poreux au moyen d'une série de suspensions de particules céramiques ou polymériques de plus en plus fines, techniques décrites dans les brevets EP 0 154 295 et EP 0 442 410, il est difficile de maîtriser les pénétrations successives de barbotine; on se heurte par ailleurs à de sérieux problèmes de fissuration dus au retrait pendant le frittage du matériau, ce retrait étant d'autant plus fort que la dimension des particules à fritter est faible. Enfin, les coûts et délais de fabrication engendrés par les remplissages successifs sont prohibitifs vis-à-vis d'applications industrielles.

Le brevet EP 0 154 295 décrit par ailleurs le remplissage de la porosité par un émail. On se heurte toutefois à plusieurs problèmes. Il est nécessaire d'utiliser des émaux dont le coefficient de dilatation présente un bon accord avec la membrane. D'autre part, l'utilisation industrielle des membranes de microfiltration implique des lavages acides et basiques à forte concentration et à des températures de l'ordre de 80 à 100°C. Il n'existe aucun émail pouvant résister à la fois aux acides et aux bases à forte concentration. D'autre part, les émaux cuisent à des températures supérieures aux températures de frittage des couches d'ultrafiltration et à fortiori des couches de nanofiltration, d'osmose inverse ou de séparation de gaz. Il ressort de ce fait que la couche de séparation ne peut être déposée qu'après la "mise en place" de l'émail et qu'une fissuration importante est toujours à craindre à l'interface couche-émail.

Enfin, le matériau de remplissage de la porosité d'extrémité pourrait être une résine liquide polymérisable. De telles résines ne peuvent convenir que lorsque le dispositif de filtration n'est pas soumis à des températures élevées et à des variations de températures importantes entraînant des contraintes thermiques importantes en raison de différences entre les coefficients de dilatation des résines et des membranes céramiques. Or l'utilisation industrielle des membranes de filtration implique outre des lavages chimiques à des températures de l'ordre de 80 à 100°C des stérilisations à la vapeur à des températures de l'ordre de 120°C.

On peut imaginer de couvrir l'extrémité de la membrane par la couche utilisée pour la séparation. Toutefois, on constate assez rapidement une détérioration des performances d'étanchéité. En effet, la couche subit alors une érosion progressive due à la multitude des chocs frontaux et directs entre les particules du fluide à traiter et la couche. Le rôle de cette dernière étant d'avoir les performances de filtration optimun, sa structure est la plus poreuse possible, ce qui est peu compatible avec les critères de résistance mécanique d'un étanchage d'extrémité.

Ainsi, aujourd'hui, il n'existe aucune solution satisfaisante pour remplir la porosité de l'extrémité des membranes et par là-même éviter les fuites de fluides, et cela dans le cas des membranes d'ultrafiltration, de nanofiltration, d'osmose inverse ou de séparation de gaz. Chacune des solutions préconisées comporte en elle-même ses propres limitations: le remplissage par des poudres céramiques ne permet pas d'obtenir des extrémités parfaitement étanches, l'utilisation d'un émail ou d'un polymère organique donne des extrémités étanches mais n'est pas satisfaisante du point de vue résistance chimique et dilatation; enfin, la dépose d'une couche d'extrémité n'est pas satisfaisante du point de vue de l'érosion.

La présente invention a pour but de procurer un dispositif de séparation par membrane et notamment de filtration, qui permette d'obtenir un fluide épuré de pureté élevée à l'aide d'un étanchage de l'extrémité du bloc macroporeux efficace et de bonne solidité mécanique et chimique, et présentant une bonne résistance à l'abrasion afin de palier aux inconvénients précédemment décrits.

La présente invention a pour objet un dispositif à membrane pour filtration, séparation ou réaction catalytique comportant:
- un bloc macroporeux en matériau céramique fritté, en métal fritté, ou en verre, ou en carbone, percé de canaux longitudinaux parallèles dont la surface est recouverte d'une membrane en une matière organique ou en matériau céramique fritté, ou en verre ou en carbone, de porosité plus fine que celle dudit bloc, ou perméable par diffusion, ledit matériau étant éventuellement modifié par dopage par des catalyseurs,
- des moyens d'introduction d'un fluide à épurer à la première extrémité desdits canaux,
- des moyens de recueil d'un fluide épuré situés au niveau de la surface latérale dudit bloc,
- des moyens de recueil d'un fluide résiduel à la seconde extrémité desdits canaux,

la porosité des deux extrémités dudit bloc macroporeux étant remplie d'un matériau dense,
dispositif caractérisé par le fait que ledit matériau est formé par un polycondensat organo-minéral mono ou polymétallique ayant subi un traitement thermique, ce type de condensat étant connu sous le nom de ORMOSIL (organically modified silicate) ou ORMOCER (organically modified ceramic).

Selon une variante de réalisation, ladite porosité des deux extrémités dudit bloc macroporeux a été antérieurement réduite par le dépôt de petites particules.

On observe dans les deux cas, grâce à la microscopie électronique à balayage le remplissage parfait des pores d'extrémités du bloc. Ce remplissage peut être caractérisé par différentes techniques de mesure. La porosité des extrémités du bloc macroporeux mesurée par pycnométrie est fortement réduite puisqu'elle ne représente plus au maximum que 1% de la porosité initiale, c'est-à-dire de leur porosité avant le remplissage par l'ORMOSIL/ORMOCER. La porosimétrie mercure ne permet pas de détecter une porosité ouverte dans l'extrémité, c'est-à-dire qu'aucun signal n'est mesuré sur les faces imprégnées. Ce résultat est confirmé par la méthode du point de bulle décrite par T.H MELTZER (Bul. Par. drug ass. vol. 65(4), 165-174, 1971). Les résultats obtenus quant à la qualité d'étanchéité des imprégnations sont similaires à ceux obtenus par un étanchage à base d'émaux ou de résine polymérique.

Ainsi, ces ORMOSILS/ORMOCERS, grâce à leurs propriétés adaptées, permettent d'obtenir sur le bloc macroporeux des extrémités étanches présentant simultanément les aspects positifs des étanchages émaux ou résine (étanchéité parfaite) et des étanchages céramique (résistance à la corrosion très élevée).

Différents produits de type ORMOSILS/ORMOCERS ont déjà été décrits dans la littérature.

Par exemple, on peut citer SCHMIDT & SEIFERLING (Mat. Res. Soc. Symp. Proc., 73, 1986, 739-750); KOHJIYA, OCHIAI & YAMASHITA (J. non crystalline solids, 119, 1990, 132-135) ; DIRE, BABONNEAU, CARTURANT & LIVAGE (communication 6th Workshop glass, SEVILLE 1990), qui signalent la précipitation de particules d'oxydes métalliques lors de l'hydrolyse, précipitation qui empêche l'introduction de forte teneur en métal; HOU & SCHOLZE (J. non Crystalline Solids, 100, 1988, 418-423), qui modifient les alkoxydes métalliques pour réduire leur réactivité et leur hydrolyse.

Toutefois, on propose de mettre en oeuvre selon l'invention des ORMOCERS de composition particulière, à forte teneur en atomes métalliques, et correspondant à la formule générique:

CᵥH_{w}OₓSi_{y}Me_{z} (I)

avec:
v = 4 à 48
w = 5 à 52
x = 5 à 48
y = 2 à 16
z = 1
et où Me symbolise au moins un métal choisi dans les groupes IV A (tels que Ti, Zr, Hf), VA (tel que Ta), VIA (par exemple W), IIIB (par exemple Al), IVB (tel que Si) de la classification périodique, et de préférence le zirconium, l'hafnium et le tantale, le rapport v / (y + z) étant inférieur à 7 et de préférence inférieur à 5.

Ces ORMOCERS à forte teneur en atomes métalliques sont obtenus en faisant réagir
. un ou plusieurs dérivé(s) métallique(s) du type MeRₓ (II) où Me a la signification définie ci-dessus, et où R représente soit un groupement hydrolysable-tel que atome d'halogène, alcoxy, acryloxy, acétyl acétonate, et de préférence alcoxy, soit un groupement hydroxy;
   X représente la valence de l'élément métallique;
. avec un ou plusieurs silane(s) fonctionnel(s) de formule générale:

R'ₙ Si(R''Y)₍₄₋ₙ₎ (III)

dans laquelle:
- n est inférieur à 4,
- R' représente un ou plusieurs groupes organiques hydrolysables de type alcoxy, aryloxy, ou un atome d'halogène ou un groupe hydroxy,
- R''Y représente une chaîne organique non hydrolysable et fonctionnalisée, dans laquelle R" représente une chaîne carbonée, saturée, insaturée, cyclique ou aromatique, comprenant éventuellement des hétéroatomes tels que oxygène,
- et Y représente un reste réactif dans les conditions de réactions tel que groupement époxy ou une insaturation, et par exemple, un groupe vynil ou allyl.

La synthèse de ces ORMOCERS à forte teneur métallique se fait en plusieurs étapes: synthèse du précurseur liquide, puis réticulation de ce précurseur (cette étape se faisant après infiltration du précurseur liquide dans les pores des extrémités dudit bloc).

Dans un premier temps de la première étape, il y a préhydrolyse partielle du silane fonctionnalisé (III) par addition d'eau en milieu acide ou basique. Cette hydrolyse libère partiellement les sites de condensation sur le silicium pour le composé métallique. Afin de mieux contrôler cette hydrolyse, il est préférable d'ajouter l'acide sous forme d'une solution alcoolique, l'eau étant ajoutée à part. Cette technique permet un meilleur dosage de la quantité d'eau nécessaire à l'hydrolyse. Le dérivé métallique (II) est ensuite ajouté. Il y a alors une condensation de ce dérivé métallique sur les positions hydrolysées du silane fonctionnalisé.

La préhydrolyse du dérivé silane permet la condensation de l'alkoxyde sur les positions hydrolysées du silicium. Il est ainsi possible d'ajouter de fortes teneurs en alkoxyde métallique sans que celui-ci ne précipite, formant des particules d'oxyde métallique au sein du réseau organo-silicé. Ce phénomène étant fortement préjudiciable à l'ensemble des propriétés de l'ORMOCER.

La réaction est poursuivie par une étape de reflux qui permet de finir la polycondensation moléculaire.

Dans un dernier temps, on procède à l'élimination totale des solvants ainsi que des produits de condensation (eau et alcool) ou des produits d'hydrolyse, et des catalyseurs tel que HCl.

Ce mode opératoire permet d'obtenir un précurseur de l'ORMOCER liquide qui est infiltrable dans le réseau poreux de la membrane selon l'invention. Ce précurseur est ensuite polymérisé thermiquement in situ (dans les pores) à partir de la fonction Y portée initialement sur la molécule de silane, pour donner l'ORMOCER.

Selon la nature des atomes métalliques qu'ils contiennent, on observe pour ces ORMOCERS une augmentation de leur résistance chimique et notamment à la corrosion aux acides et aux bases, une diminution de leur coefficient de dilatation et une augmentation de leur stabilité thermique. Il est donc ainsi possible d'adapter la composition de l'ORMOCER à une utilisation particulière.

Le dispositif à membranes réalisé avec cette préférence d'ORMOCER présente une résistance à la corrosion chimique extrêmement élevée, en particulier aux pH très acides (pH ≦ 0) et très basiques (PH ≧ 14), et cela même pour des températures d'une centaine de degrés. Les résultats obtenus quant à la résistance chimique des imprégnations sont similaires à ceux obtenus par un étanchage de type céramique.

La présente invention a également pour objet un procédé de remplissage de la porosité des extrémités du bloc macroporeux d'un dispositif à membrane précédemment défini, caractérisé par le fait qu'il comprend:
- une première étape dans laquelle on prépare un condensat organo-minéral, précurseur de l'ORMOSIL ou de l'ORMOCER, liquide, polymérisable thermiquement grâce à la présence de groupements réactifs situés régulièrement dans la chaîne de ce précurseur, les solvants introduits pendant la préparation ou résultant de celle-ci (produits de condensation) étant éliminés avant polymérisation, et par exemple par évaporation sous vide,
- une deuxième étape dans laquelle on trempe successivement chacune des extrémités du bloc macroporeux dans ce précurseur d'ORMOSIL/ORMOCER pur,
- une troisième étape dans lequelle on réalise la polymérisation de ce précurseur.

La porosité des extrémités du bloc macroporeux est donc remplie d'abord par un précurseur liquide de l'ORMOSIL/ORMOCER, qui correspond à un intermédiaire de synthèse, que la polymérisation transforme en une matrice amorphe.

Cette polymérisation peut s'effectuer par élévation de température (polymérisation thermique). Le cycle thermique utilisé pour la polymérisation se caractérise par trois points particuliers:
a) une montée en température relativement lente, 30°C/h au maximum,
b) un long palier à une température comprise entre 60 et 100°C,
c) un palier de réticulation entre 110 et 160°C, et cela afin d'obtenir la polymérisation la plus homogène possible.

Le cas échéant, il est possible de répéter les étapes une ou plusieurs fois afin d'obtenir la densité de remplissage souhaitée. Lors de la polymérisation thermique, il est nécessaire de respecter scrupuleusement un cycle thermique particulier afin d'obtenir une polymérisation homogène du précurseur de l'ORMOCER, fractionné dans de petites cellules (les pores du bloc) de polymérisation d'une part, et d'éviter l'inclusion de micro domaines renfermant les produits d'élimination de la polymérisation (par exemple d'eau dans le cas des époxy silanes).

Dans une première variante du procédé, le remplissage est effectué sous ultrasons. L'agitation du bain de trempage par les ultrasons permet d'augmenter la quantité de précurseur s'infiltrant dans la porosité de la membrane. D'autre part, les ondes ultrasoniques provoquent dans le réseau poreux des réarrangements intramoléculaires des chaînes d'ORMOSILS/ORMOCERS. Ces réarrangements créent des liaisons entre chaînes d'ORMOSILS/ORMOCERS. A ces liaisons, s'ajoutent les liaisons formées lors de la cuisson de réticulation. L'ORMOSIL/ORMOCER obtenu in fine possède un taux de liaisons "interchaîne" supérieur à celui qu'il aurait eu en l'absence d'ultrasons. Ce taux supérieur de liaisons entraîne une amélioration des propriétés physico-chimiques du produit, en particulier du coefficient de dilatation et de la résistance chimique.

Dans une deuxième variante, après la phase d'infiltration dans la porosité, on soumet l'extrémité dudit bloc avec son remplissage de précurseur d'ORMOCER à un rayonnement ionisant, et par exemple un rayonnement gamma ou électronique. Ce rayonnement provoque la formation de centres réactionnels, qui sont à l'origine de la formation, entre les différentes chaînes d'ORMOSILS/ORMOCERS, des liaisons supplémentaires par rapport à celles formées lors de la cuisson de réticulation. Ce taux supérieur de liaisons entraîne une amélioration des propriétés physico-chimiques du produit, en particulier du coefficient de dilatation et de la résistance chimique.

D'autres caractéristiques et avantages de la présente invention apparaîtront au cours de la description suivante de modes de réalisation donnés à titre illustratif mais nullement limitatif. Dans le dessin annexé:
- la figure 1 montre une photo agrandie des macropores d'un bloc support appartenant à un dispositif selon l'invention, avant le remplissage par l'ORMOCER,
- la figure 2 montre les macropores du bloc de la figure 1 rempli par un ORMOCER selon l'invention,
- les figures 3 et 4 sont analogues aux figures 1 et 2 mais les macropores ont été préalablement réduits par de petites particules.

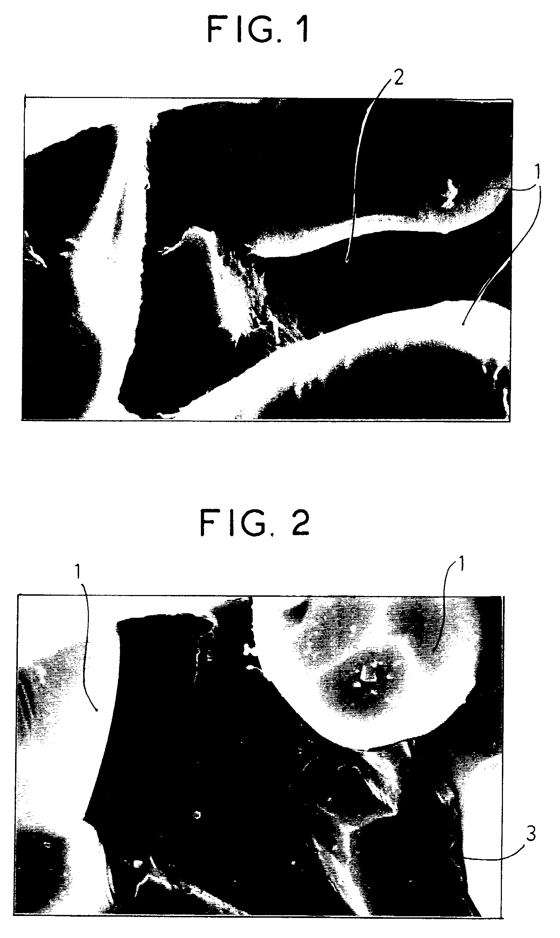

On voit dans la figure 1 des grains d'alumine 1 d'un bloc support avec des pores 2 de plusieurs microns de diamètre moyen. Dans la figure 2, les pores 2 ont été remplis d'ORMOCER 3 à l'état liquide, ce qui permet un remplissage optimum et sans défaut. La solidification de l'ORMOCER a été obtenue par cuisson de réticulation à basse température (inférieure à 200°C). Cette réticulation lie les chaînes d'ORMOCER entre elles et elle est obtenue sans retrait ni fissuration, ce qui permet la conservation de la qualité de remplissage obtenue. Il se forme donc une phase solide qui étanche et imperméabilise l'extrémité du bloc. La microscopie à balayage visualise parfaitement le remplissage de ces pores.

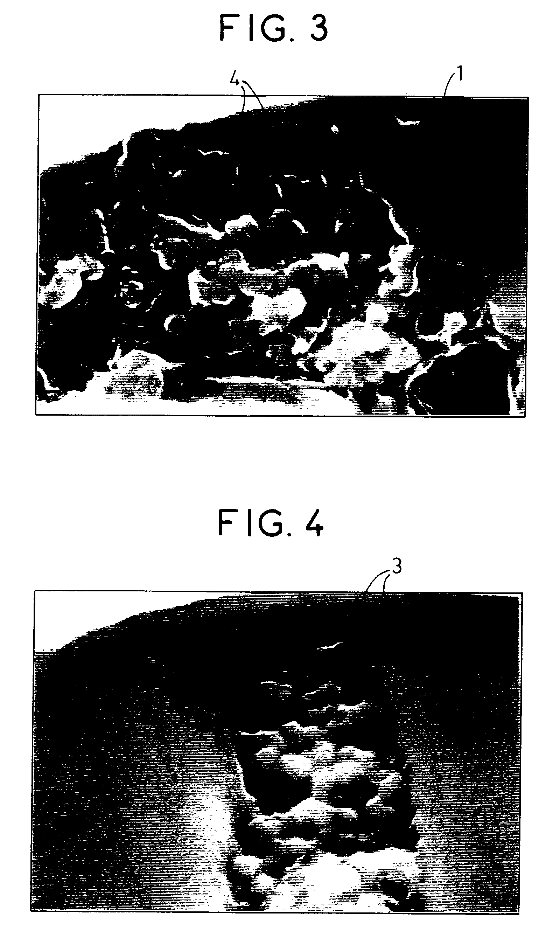

Dans la figure 3 on voit que les pores 2 ont été préalablement remplis de petites particules d'étanchage selon un procédé connu.
La figure 4 montre l'effet du remplissage de la porosité visible dans la figure 3 par un ORMOCER 3.
L'extrémité ainsi étanchée du bloc macroporeux présente les caractéristiques identiques à celle décrite ci-dessus avec les figures 1 et 2. Cette variante présente l'avantage de réduire la quantité d'ORMOCERS nécessaire pour obtenir ce résultat.

Les exemples 1 à 7 qui vont suivrent donnent des exemples précis de réalisation.

### EXEMPLE 1

On veut étancher l'extrémité d'un élément de filtration constitué d'un support en alumine poreuse (porosité 40%, diamètre moyen de pore 15 µm) percé de 19 canaux de 4 mm de diamètre, et de deux couches superposées de diamètre moyen de pore 800 nm et 200 nm.

On prépare un ORMOCER tel que décrit par SCHMIDT et SEIFERLUNG dans Mat. Res. Soc. Symp. Proc. 73 (1986), p. 739-750.

On imprègne chacune des deux extrémités du bloc macroporeux par l'ORMOCER. Le liquide pénètre dans le bloc macroporeux sur une distance de 18 mm. Le surplus d'ORMOCER est éliminé par égouttage, puis on le soumet à une cuisson de polymérisation à 130°C. La montée en température se fait à la vitesse de 10°C/h; un palier de 5 heures est réalisé à la température de 65°C; un second palier de 4 heures est réalisé à la température de cuisson.

L'observation microscopique montre un remplissage total de la porosité d'extrémité du bloc macroporeux. La mesure de la porosité de ce bloc donne une porosité résiduelle de 0,1%, soit 0,25% de la porosité initiale. La porosimétrie mercure effectuée sur l'extrémité ainsi étanche du bloc macroporeux ne permet pas de mesurer un diamètre de pore.

La résistance à la corrosion chimique est mesurée au moyen d'une boucle de filtration. Ce test est représentatif de l'utilisation réelle des membranes. Les solutions corrodantes (HNO₃ 6% massique pH = 0 et NaOH 4% massique pH = 14) chaudes (70°C) circulent le long des membranes et les traversent par perméation. La solution acide circule pendant 20 mn, sur et dans la membrane, qui est rincée à l'eau froide (20°C) avant d'être mise au contact de la solution basique pendant 20 mn; un dernier rinçage est alors effectué. Les membranes soumises à 100 cycles de ce type ne présentent aucune altération de leurs caractéristiques.

### EXEMPLE 2

Pour étancher l'extrémité d'un tube (diamètre interne: 30 mm; diamètre externe 36 mm) en acier inoxydable fritté ayant une porosité de 50% et des pores de 20 µm de diamètre moyen, on prépare un ORMOCER dans les conditions décrites par KOHJIYA et al. (J. non Crystalline Solids, 119, 1990, 132-135).

On imprègne chacune des deux extrémités du bloc macroporeux avec cet ORMOCER, qui pénètre dans le bloc macroporeux sur une distance de 10 mm. Après égouttage et figeage, on réalise une cuisson de réticulation à 100°C pendant deux heures après un premier palier de 8 heures à 50°C, la montée en température se faisant à la vitesse de 10°C/h. Après refroidissement, on procède à un deuxième étanchage dans les mêmes conditions et avec le même produit; la cuisson est faite dans les mêmes conditions.

L'observation microscopique du bloc poreux (coupe polie) montre que le remplissage de la porosité est complet. La porosité résiduelle de la zone imprégnée du bloc macroporeux est de 0,2%, soit 0,4% de la porosité initiale, et, par ailleurs, la porosimétrie mercure ne met pas de pore en évidence; la membrane ainsi étanchée passe avec succès le test de corrosion décrit dans l'exemple 1.

### EXEMPLE 3

On veut étancher l'extrémité d'un élément de nanofiltration de géométrie multicanal. L'extrémité de cet élément a été partiellement colmatée par une poudre céramique et présente une porosité résiduelle de l'ordre de 20% avec un diamètre de pore de 1 µm.

Dans ce but, on prépare un ORMOCER par préhydrolyse du (3,4 époxy cyclohexyl) éthyl triméthoxy silane (120 millimoles) par une solution aqueuse d'acide chlorhydrique (0,009 millimole) pendant une nuit. on ajoute ensuite 30 millimoles d'isopropoxyde de zirconium et 0,208 millimole d'acide chlorhydrique en solution aqueuse; la condensation est achevée par une étape de reflux (70°C) pendant 30 mn. On obtient, après élimination des solvants par évaporation sous vide et refroidissement, un liquide visqueux (120 mPas).

L'analyse chimique donne comme composition pour l'ORMOCER la formule suivante:

C₃₂H₅₂0₁₆Si₄Zr₁

avec un rapport carbone sur silicium + zirconium de 6,4.

On imprègne chacune des extrémités de l'élément nanofiltrant avec cet ORMOCER. La zone imprégnée s'étend jusqu'à atteindre une hauteur de 5 mm. Après égouttage et figeage de l'ORMOCER, on procède à une cuisson de réticulation à 150°C pendant deux heures, la montée en température se faisant à la vitesse de 30°C/h, et le cycle comporte un palier de 16 h à 65°C.

La qualité de cette imprégnation est contrôlée. La microscopie sur coupe polie permet de vérifier le remplissage total des pores. De plus, on ne peut pas mettre en évidence de porosité résiduelle dans la zone imprégnée. Enfin, la porosimétrie mercure ne détecte pas de pore dans la zone contenant l'ORMOCER.

Un test de corrosion chimique par filtration alternée de solution d'acide nitrique (10% massique), puis de soude (10% massique) a été effectué 100 fois sur la membrane sans provoquer de dégradation des caractéristiques de l'extrémité.

### EXEMPLE 4

On veut étancher l'extrémité d'un élément filtrant constitué d'un tube métallique (diamètre interne 7 mm) de porosité 33% et de diamètre de pore 7 µm, recouvert de plusieurs couches en céramique poreuse (couches à diamètre de pore moyen 800 nm, puis 200 nm et enfin 20 nm).

On prépare pour cela un ORMOCER en préhydrolysant du trichloro-vinyl silane (45 millimoles) et 0,05 millimole d'acide chlorhydrique en solution aqueuse, et 50 ml de solution équimolaire eau - méthanol comme solvant. La réaction a lieu à l'abri de l'air à la température ambiante pendant 15 heures. On ajoute alors 4 millimoles d'hydroxyde de titane. Après élimination des solvants, on obtient un liquide visqueux (viscosité 98 mPas).

L'analyse chimique donne pour l'ORMOCER la formule suivante:

C₂₃H₃₄0₅Si₁₁Ti₁

avec un rapport carbone sur silicium et titane de 1,92.

On imprègne alors chacune des deux extrémités de l'élément filtrant en les plongeant dans l'ORMOCER agité par ultrasons. L'ORMOCER pénètre la porosité de l'extrémité du bloc et s'étend sur une longueur de 12 mm. Après égouttage de l'ORMOCER, on réalise sa réticulation par cuisson. Après un premier palier de 10 H à 50°C, la température augmente à la vitesse de 10°C/H jusqu'à 140°C, température à laquelle un palier de 6 H est réalisé.

L'observation en microscopie électronique à balayage permet de vérifier le remplissage complet de la porosité de l'extrémité de l'élément filtrant. La pycnométrie mesurée sur la zone imprégnée du bloc poreux montre une porosité résiduelle de 0,08%, soit 0,26% de la porosité initiale. La porosimétrie mercure ne permet pas de mesurer un diamètre de pore.

Un test de corrosion est réalisé en condition acide (HNO₃ 6% massique pH=0 à 80°C) et basique (NaOh : 10% massique pH > 14 et 90°C) alternée. Aucune diminution de caractéristiques n'est mise en évidence après 150 cycles de corrosion.

### EXEMPLE 5

On veut étancher l'extrémité d'un élément filtrant multicanal en céramique poreuse (porosité 18%, diamètre de pore 4 µm), dont les canaux sont recouverts d'une couche d'ultrafiltration (diamètre de pore 10 nm)

On prépare pour cela un ORMOCER en réalisant une préhydrolyse du triéthoxy vynil silane (40 millimoles) par de l'eau (10 millimoles), en présence de 5 millimoles d'acide chlorhydrique en solution alcoolique. On ajoute ensuite 20 millimoles d'éthoxy tantale. Après 30 minutes d'agitation, un complément de 30 millimoles d'eau est ajouté. La condensation est poursuivie à 70°C pendant 5 heures. On obtient, après élimination des produits de condensation et des solvants, un liquide de viscosité 53 mPas.

L'analyse chimique fournit comme composition de l'ORMOCER:

C₄H₆0₅Si₂Ta₁

avec un rapport carbone sur silicium et tantale de 1,33.

On imprègne chacune des deux extrémités de l'élément multicanal en les plongeant dans le bain d'ORMOCER sous agitation ultrasonique. La zone imprégnée s'étend sur une distance de 8 mm. Après égouttage et figeage de l'ORMOCER, on procède à une cuisson de réticulation à 125°C pendant 5 heures, la montée en température se faisant à la vitesse de 12°C/h, un palier de 3 H à 75°C ayant été respecté.

L'observation macroscopique du bloc macroporeux montre que le remplissage de la porosité est complet. La porosité résiduelle de la zone imprégnée de l'élément filtrant multicanal est de 0,03%, soit 0,17% de la porosité initiale, et, d'autre part, la porosimétrie mercure ne peut pas mesurer de pore dans cette zone.

L'élément filtrant ainsi préparé subit un test de corrosion alternée (HN0₃ 10%, pH < 0 et 60°C, NaOH 15%, pH > 14 et 90°) en filtration. Après 150 cycles acide - rinçage - soude - rinçage, les caractéristiques de l'extrémité du bloc restent inchangées.

### EXEMPLE 6

Pour étancher l'extrémité d'un tube alumine (diamètre interne 25 mm) de porosité 38% et de diamètre de pore 12 µm, dont on a au préalable réduit la porosité de l'extrémité jusqu'à 28% par introduction de particules céramique.

On prépare un ORMOCER en réalisant une préhydrolyse du glycidoxypropyl triméthoxy silane (240 millimoles) par addition de 1 millimole d'acide chlorhydrique en solution éthanol et 50 millimoles d'eau, sous agitation pendant 30 minutes. On ajoute alors 30 millimoles de phénoxyde d'aluminium et 35 millimoles de tétra éthoxy d'hafnium, puis 15,4 millimoles d'acide chlorhydrique en solution éthanol et 75 millimoles d'eau. La condensation est poursuivie pendant 6 heures à 60°C. Après élimination des solvants et des produits d'élimination de la condensation, on obtient un liquide de viscosité 68 mPas.

L'analyse chimique de l'ORMOCER donne comme formule:

C₂₂H₄₁0₁₈Si₄Al_{0,46}Hf_{0,54}

avec un rapport de carbone sur silicium et aluminium et d'hafnium de 4,4.

On imprègne chacune des deux extrémités du tube par trempé dans le bain d'ORMOCER, qui pénètre ce bloc sur une distance de 10 mm. Après égouttage et figeage de l'ORMOCER, on réalise une cuisson de réticulation à 100°C pendant 10 heures, la montée en température se faisant à la vitesse de 8°C/mm (palier intermédiaire de 3 h à 55°C).

L'observation microscopique montre un remplissage total des pores de l'extrémité du tube. La porosité de la zone imprégnée est de 0,05%, soit 0,18% de la porosité initiale. D'autre part, aucun pore n'est détecté par la porosimétrie mercure.

Un test de corrosion est réalisé en condition acide (HNO₃ 6% massique, 65°C, pH < 0) et basique (NaOH 10% massique, 95°C, pH < 14) et en filtration. Après 150 cycles acide - rinçage - base - rinçage, les caractéristiques de l'extrémité du bloc restent inchangées.

### EXEMPLE 7

Pour étancher l'extrémité de l'élément filtrant décrit dans l'exemple 4, on prépare un ORMOCER en réalisant une préhydrolyse du propargyl triméthoxy silane (175 millimoles) avec 0,2 millimole d'acide chlorhydrique en solution alcoolique et 55 millimoles d'eau, sous agitation pendant 30 minutes. On ajoute alors 11 millimoles d'acétyl acétonate de tungstène puis 5,3 millimoles d'acide chlorhydrique en solution éthanol. La condensation est poursuivie pendant 6 heures à 60°C. Après élimination des solvants et des produits d'élimination de la condensation, on obtient un liquide de viscosité 68 mPas.

L'analyse chimique de l'ORMOCER donne comme formule

C₄₈H₄₈0₄₈Si₁₆W₁

avec un rapport carbone sur silicium et tungstène de 2,82.

On imprègne chacune des deux extrémités du tube par trempé dans le bain d'ORMOCER, qui pénètre ce bloc sur une distance de 10 mmp. Après égouttage et figeage de l'ORMOCER, on réalise une cuisson de réticulation à 100°C pendant 10 heures, la montée en température se faisant à la vitesse de 8°C/mn (palier intermédiaire de 3 h à 55°C).

L'observation microscopique montre un remplissage total des pores de l'extrémité du tube. La porosité de la zone imprégnée est de 0,01%, soit 0,003% de la porosité initiale. D'autre part, aucun pore n'est détecté par la porosimétrie mercure.

Un test de corrosion est réalisé en condition acide (HNO₃ 6% massique, 65°C, pH < 0) et basique (NaOH 10% massique, 95°C, pH > 14) et en filtration. Après 150 cycles acide - rinçage - base - rinçage, les caractéristiques de l'extrémité du bloc restent inchangées.

Bien entendu l'invention n'est pas limitée aux modes de réalisation qui viennent d'être décrits. On pourra, sans sortir du cadre de l'invention, remplacer tout moyen par un moyen équivalent.

## Revendications

**1/** Dispositif à membrane pour filtration, séparation ou réaction catalytique comportant:
- un bloc macroporeux en matériau céramique fritté, en métal fritté, ou en verre, ou en carbone, percé de canaux longitudinaux parallèles dont la surface est recouverte d'une membrane en une matière organique ou en matériau céramique fritté, ou en verre ou en carbone, de porosité plus fine que celle dudit bloc, ou perméable par diffusion, ledit matériau étant éventuellement modifié par dopage par des catalyseurs,
- des moyens d'introduction d'un fluide à épurer à la première extrémité desdits canaux,
- des moyens de recueil d'un fluide épuré situés au niveau de la surface latérale dudit bloc,
- des moyens de recueil d'un fluide résiduel à la seconde extrémité desdits canaux,
la porosité des deux extrémités dudit bloc macroporeux étant remplie d'un matériau dense, dispositif caractérisé par le fait que ledit matériau (3) est formé par un polycondensat organo-minéral mono ou polymétallique ayant subi un traitement thermique, ce type de condensat étant connu sous le nom de ORMOSIL (organically modified silicate) ou ORMOCER (organically modified ceramic).

**2/** Dispositif selon la revendication 1, caractérisé par le fait que ladite porosité des deux extrémités dudit bloc macroporeux a été antérieurement réduite par le dépôt de petites particules.

**3/** Dispositif selon l'une des revendications précédentes, caractérisé par le fait que ledit matériau a la formule générique
CᵥH_{w}OₓSi_{y}Me_{z}
avec:
v = 4 à 48
w = 5 à 52
x = 5 à 48
y = 2 à 16
z = 1
et où Me symbolise au moins un métal choisi dans les groupes IV A, VA, VIA, IIIB, IVB de la classification périodique, le rapport v / (y + z) étant inférieur à 7

**4/** Dispositif selon la revendication 3, caractérisé par le fait que ledit rapport v/ (y + z) est inférieur à 5.

**5/** Dispositif selon l'une des revendications 3 à 4, caractérisé par le fait que ledit métal est choisi parmi Ti, Zr, Hf, Ta, W, Al, Si.

**6/** Procédé de remplissage de la porosité des extrémités du bloc macroporeux d'un dispositif à membrane selon l'une des revendications précédentes, caractérisé par le fait qu'il comprend:
- une première étape dans laquelle on prépare un condensat organo-minéral, précurseur de l'ORMOSIL ou de l'ORMOCER, liquide, polymérisable thermiquement grâce à la présence de groupements réactifs situés régulièrement dans la chaîne de ce précurseur, les solvants introduits pendant la préparation ou résultant de celle-ci étant éliminés avant polymérisation,
- une deuxième étape dans laquelle on trempe successivement chacune des extrémités du bloc macroporeux dans ce précurseur d'ORMOSIL/ORMOCER pur,
- une troisième étape dans lequelle on réalise la polymérisation de ce précurseur.

**7/** Procédé de remplissage selon la revendication 6, caractérisé par le fait que la polymérisation est effectuée par élévation de température selon le traitement suivant:
a) une montée en température relativement lente, 30°C/h au maximum,
b) un long palier à une température comprise entre 60 et 100°C,
c) un palier de réticulation entre 110 et 160°C.

**8/** Procédé selon l'une des revendications 6 et 7, caractérisé par le fait que, lors de l'opération de trempage des extrémités dudit bloc macroporeux, ledit précurseur est agité par des ultrasons.

**9/** Procédé selon l'une des revendications 6 à 8, caractérisé par le fait qu'après l'opération de remplissage, les extrémités dudit bloc sont soumises à un rayonnement ionisant, tel qu'un rayonnement gamma ou électronique.
